# EUROPEAN PATENT SPECIFICATION

(11) **EP 1 739 873 B1**
(45) Date of publication and mention of the grant of the patent: **24.09.2008**
(21) Application number: 05254155.4
(22) Date of filing: 01.07.2005
(51) Int. Cl.: H04L 9/32

(54) **Active new password entry dialog with compact visual indication of adherence to password policy**
Aktive Eingabemaske für ein neues Kennwort mit kompakter visueller Anzeige der Einhaltung der Kennwortregeln
Dialogue actif d'entrée d'un nouveau mot de passe avec indication visuelle compacte d'observance des règles de mot de passe

(43) Date of publication of application: 03.01.2007
(73) Proprietor: Research In Motion Limited, Waterloo, Ontario N2L 3W8 (CA)
(72) Inventor: Brown, Michael K., Kitchener, Ontario N2M 2Z2 (CA); Brown, Michael S., Waterloo, Ontario N2K 4B1 (CA); Adams, Neil P., Waterloo, Ontario N2K 4E4 (CA); Little, Herbert A., Waterloo, Ontario N2T 2V8 (CA); McCallum, Michael E., Elmira, Ontario N3B 3M2 (CA); Davis, Dinah L.M., Waterloo, Ontario N2L 2J3 (CA)
(74) Representative: Roberts, Gwilym Vaughan

(56) References cited:
- US-A1- 2002 078 386
- US-A1- 2003 079 132
- ALADDIN KNOWLEDGE SYSTEMS LTD.: "eToken Reference Guide"[Online] August 2003 (2003-08), XP002370067 Retrieved from the Internet: URL:http://etoken.mikrobeta.com.tr/PDF/eTo ken_Enterprise_Reference_3_50_Guide.pdf> [retrieved on 2006-02-28]

## Description

### BACKGROUND

### 1. Technical Field

This application generally relates to an active new password entry dialog with compact visual indication of adherence to password policy. It may be used with mobile wireless communication devices having a limited visual display area.

### 2. Related Art

Computer-based electronic devices of many sorts now require passwords for authorized operation. For ensuring an appropriate level of security, such passwords should be changed frequently.

The need to enter new passwords is especially present for mobile wireless communication devices which may be lost, stolen, misplaced or the like. If such new password entry routines require communication with a base station or the like, then communication bandwidth is also required for new password entry processes. Conservation of such bandwidth for more useful communication payload is, of course, desirable. Furthermore, small handheld mobile wireless communication devices often have limited numbers of keys and limited display area.

If a user needs to set a new password, often he/she has to conform to some password policies that the user's employer has determined.

A typical current problem is that the user enters a password, clicks OK, and only then is the password checked against the required policies. If it passes, all is well. If it fails, then a dialog may pop up explaining what policy or part of a policy the password failed to satisfy. Then the user must start all over again.

This is not an ideal solution. It would be better if the user could be alerted while setting the password, to let him/her know how they are doing. This would make the user experience much better.

There are at least two earlier products that address some aspects of this problem:
1) Entrust S/MIME Client has a dialog box for setting a password. In this dialog box all of the password policies are listed and an indication is provided as to whether or not the new password being entered is meeting such policies.
   PGP Keys Client, when creating a PGP key, requires the user to set a password. While the user is typing a password, a progress-like bar is displayed at the bottom of the screen which indicates the estimated security strength of the new password.

The Entrust approach puts a lot of information all on one screen. A small handheld mobile wireless device typically does not have sufficient display area available for this approach. The PGP approach does use a more compact higher level progress-like bar - but only one that refers to the estimated security strength of the password being entered. It has nothing to do with password policy.

Another example of the "PGP" type can be found at Aladdin Knowledge Systems Limited: "eToken Reference Guide", August 2003. Here, just as in the PGP example cited above, a visual indication of password quality is displayed on a computer screen. An algorithm is described for computing a numerical password "quality" factor based upon various and numerous considerations. However, the reference does not address whether or not the password being entered conforms with any password policy.

In one exemplary embodiment we now add a progress bar to the screen where a new password is being entered. To overcome the problem of limited display area, we provide a progress bar with rolling hints that summarize useful feedback information into a compact visual display. This embodiment uses applicable password policies to display progress and allows the user to find out more information about the policies and the new password's compliance with such policies.

Suppose a password has a series of 5 password policies that must be met. As a user enters a password, our present exemplary embodiment is constantly checking (e.g., dynamically after each character has been entered) whether the user has yet fulfilled any policy requirements. If the user does newly satisfy a policy, the progress bar filling is increased. If the user has met 3 of the 5 requirements, then 60% of the bar will be filled. Only when the bar reaches 100% is the user allowed to click "OK" to close the dialog box and set the password.

But suppose a user has entered a password and the bar is stuck at 60%. How does the user figure out what policies have not yet been met? First one can display a hint underneath the progress bar describing one of the policies that has not yet been met. Preferably one of the remaining policies is chosen at random (rather than just in some predetermined order) to better insure that passwords on different devices are as different as possible. So, for example, if the user has not yet put a numerical character into the password, the display under the progress bar might read "MUST INCLUDE A NUMBER." In addition, in our present exemplary embodiment, the user can select the progress bar which will cause another dialog box to pop up listing all password policies along with an indication as to whether each has yet been fulfilled.

As a further optional possibility, instead of having a fixed progress bar (i.e., always present) in the dialog box, the progress bar could pop up (like tips or suggestion pop ups) below the password edit box while the user is typing. This makes the display a little more dynamic. The user gets more feedback on the quality of his/her password and on the current password policies.

Our new anangement may be embodied in hardware, software or a combination of hardware and software. It also provides a method for providing active new password entry dialog with compact visual indication of adherence to password policy. The exemplary embodiment is realized, at least in part, by executable computer program code which may be embodied in physical program memory media.

### BRIEF DESCRIPTION OF THE DRAWINGS

These and other objects and advantages will be better understood and appreciated in conjunction with the following detailed description of exemplary embodiments taken together with the accompanying drawings, in which:
**FIG. 1** is an overall system wide schematic view of an exemplary wireless email communication system incorporating a mobile wireless communication device with duress password protection in accordance with one exemplary embodiment;
**FIG. 2** is an abbreviated schematic diagram of hardware included within an exemplary mobile wireless communication device;
**FIGS. 3** is an exemplary abbreviated schematic flow chart of computer software (i.e., program logic) that may be utilized in the device of **FIG. 2** providing active new password entry dialog with compact visual indication of adherence to password policy;
**FIG. 4** is an exemplary format for an active new password entry dialog screen; and
**FIG. 5** is an exemplary format for a more detailed pop-up dialog with more detailed password policy information.

### DETAILED DESCRIPTION OF EXEMPLARY EMBODIMENTS

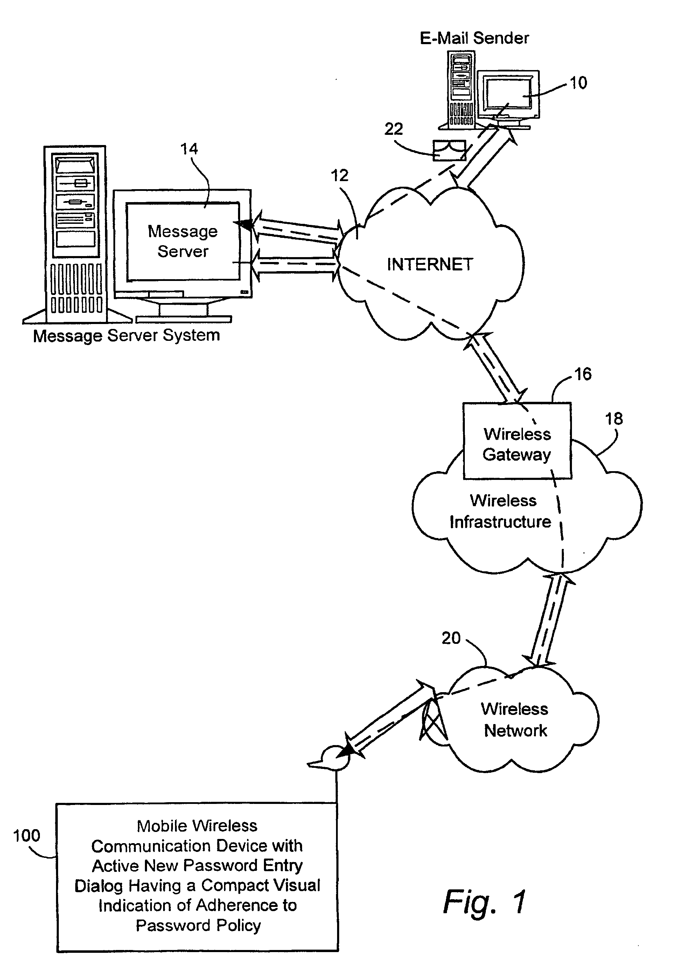

**FIG. 1** is an overview of an exemplary communication system in which a wireless communication device **100** may be used in accordance with this exemplary embodiment. One skilled in the art will appreciate that there may be hundreds of different system topologies. There may also be many message senders and recipients. The simple exemplary system shown in FIG. 1 is for illustrative purposes only, and shows perhaps the currently most prevalent Internet email environment.

FIG. **1** shows an email sender **10,** the Internet **12,** a message server system **14,** a wireless gateway **16,** wireless infrastructure **18,** a wireless network **20** and a mobile communication device **100.**

An email sender **10** may, for example, be connected to an ISP (Internet Service Provider) on which a user of the system has an account, located within a company, possibly connected to a local area network (LAN), and connected to the Internet **12,** or connected to the Internet **12** through a large ASP (application service provider) such as America Online™ (AOL). Those skilled in the art will appreciate that the systems shown in FIG. 1 may instead by connected to a wide area network (WAN) other than the Internet, although email transfers are commonly accomplished through Internet-connected arrangements as shown in FIG. **1****.**

The message server **14** may be implemented, for example, on a network computer within the firewall of a corporation, a computer within an ISP or ASP system or the like, and acts as the main interface for email exchange over the Internet **12.** Although other messaging systems might not require a message server system **14,** a mobile device **100** configured for receiving and possibly sending email will normally be associated with an account on a message server. Perhaps the two most common message servers are Microsoft Exchange™ and Lotus Domino™. These products are often used in conjunction with Internet mail routers that route and deliver mail. These intermediate components are not shown in FIG. **1****,** as they do not directly play a role in the system described below. Message servers such as server **14** typically extend beyond just email sending and receiving; they also include dynamic database storage engines that have predefined database formats for data like calendars, to-do lists, task lists, email and documentation.

The wireless gateway **16** and infrastructure **18** provide a link between the Internet **12** and wireless network **20.** The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** to the mobile device **100.** The particular network **20** may be virtually any wireless network over which messages may be exchanged with a mobile communication device.

As shown in FIG. **1****,** a composed email message **22** is sent by the email sender **10,** located somewhere on the Internet **12.** This message **22** typically uses traditional Simple Mail Transfer Protocol (SMTP), RFC 822 headers and Multipurpose Internet Mail Extension (MIME) body parts to define the format of the mail message. These techniques are all well known to those skilled in the art. The message **22** arrives at the message sever **14** and is normally stored in a message store. Most known messaging systems support a so-called "pull" message access scheme, wherein the mobile device **100** must request that stored messages be forwarded by the message server to the mobile device **100.** Some systems provide for automatic routing of such messages which are addressed using a specific email address associated with the mobile device **100.** In a preferred embodiment, messages addressed to a message server account associated with a host system such as a home computer or office computer which belongs to the user of a mobile device **100** are redirected from the message server **14** to the mobile device **100** as they are received.

Regardless of the specific mechanism controlling forwarding of messages to mobile device **100,** the message **22,** or possibly a translated or reformatted version thereof, is sent to wireless gateway **16.** The wireless infrastructure **18** includes a series of connections to wireless network **20.** These connections could be Integrated Services Digital Network (ISDN). Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Divisional Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex™ Radio Network and the DataTAC™ Radio Network. Examples of older voice-centric data networks include Personal Communication Systems (PCS) networks like GSM, and TDMA systems.

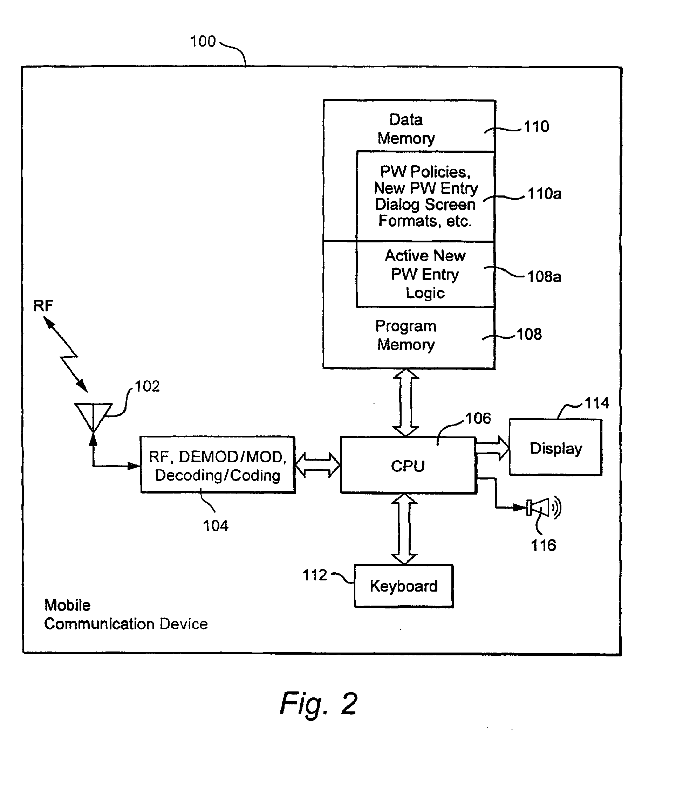

As depicted in FIG. **2****,** mobile communication device **100** includes a suitable RF antenna **102** for wireless communication to/from wireless network **20.** Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100** will also typically include a main control CPU **106** which operates under control of a stored program in program memory **108** (and which has access to data memory **110).** CPU 106 **also** communicates with a conventional keyboard **112,** display **114** (e.g., an LCD) and audio transducer or speaker **116.** A portion of data memory **110a** is available for storing password policies and entry hints, dialog screen formats and the like. Suitable computer program executable code is stored in portions of program memory **108a** to constitute the active new password entry dialog with compact visual indication of adherence to password policy logic and described below.

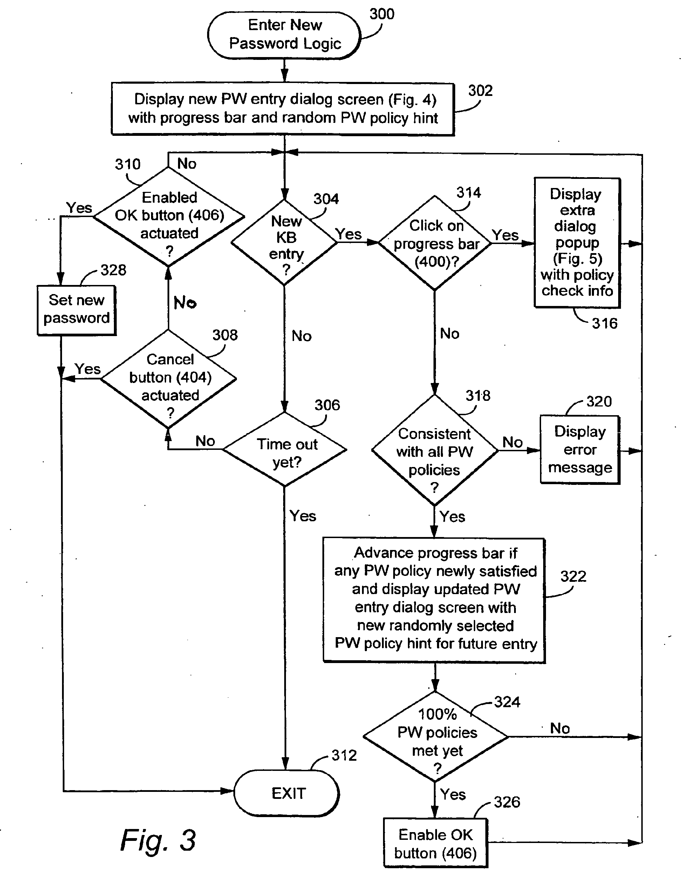

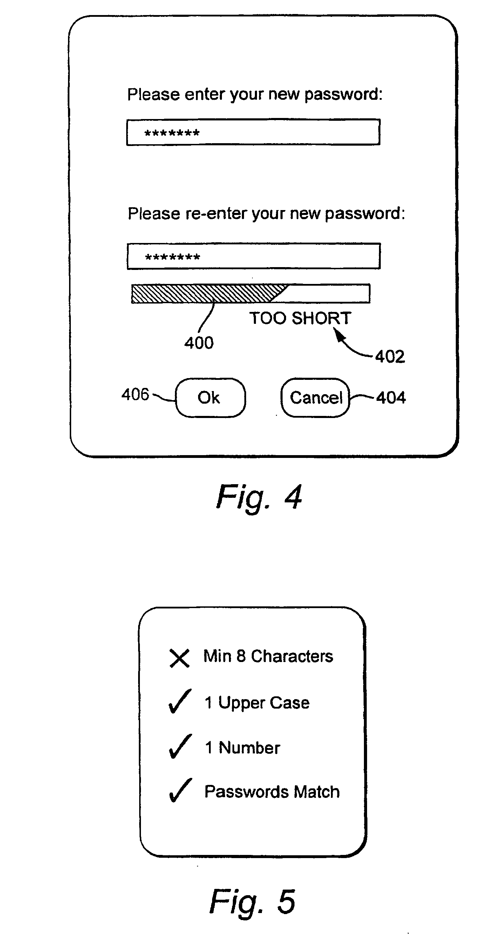

The exemplary enter new password logic is entered at **300** in FIG. **3** (e.g., upon user selection of a conventionally provided option to enter a new password and/or a system-required entry of a new password data). In the exemplary embodiment, a new password entry dialog screen such as that depicted in FIG. **4** is displayed at **302.** As will be noted, this exemplary dialog screen in FIG. **4** includes a progress bar **400** and a randomly chosen password policy hint **402** (e.g., text or icon, etc.) that may be conveniently displayed on a limited display area such as that available with a typical handheld wireless communication device. As those in the art will appreciate, the bar graph **400** may include a percentage filling indication as well (e.g., 60%) and/or may be replaced with another compact visual progress indicator or text. Another alternative would involve a color change (i.e., red→yellow→green) or icon change or other detectable feature when it is finished.

At **304, 306, 308** and **310** in FIG. 3, a timed loop is executed looking for a new keyboard entry at **304,** time out at **306,** cancel button actuation at **308** and an enabled "OK" button actuation at **310.** If the "soft" cancel buttons **404,** is actuated, then the routine is exited at **312.** Otherwise, upon detecting a new keyboard entry at **304,** a test is made at **314** to see whether the user has selected progress bar **400.** If so, then an extra dialog pop-up display (e.g., as shown in FIG. **5****)** is displayed at **316** identifying all of the applicable password policies and an indication as to whether each policy has been yet met or unmet (e.g., X and check marks as depicted in FIG. **5****).**

If the progress bar **400** has not been selected, then a test is made at **318** to ensure that the new keyboard entry is consistent with all password policies. If not, then a suitable error message is displayed at **320** and control is returned to box **304.**

If the new keyboard entry has been found consistent with all password policies, then, as depicted at **322,** if any additional password policy has now been satisfied, then the progress bar **400** will be suitably updated (along with any textual or numerical percentage completion data) and, in the presently preferred exemplary embodiment, a new randomly selected password policy hint **402** will also be updated on the display screen for future keyboard entries. A test is made at **324** to see if 100% of all applicable password policies have yet been met. If not, then control is returned to **304.** If so, then the Ok button is enabled at **326** before control is again returned to box **304.**

As those in the art will appreciate, variations and modifications may be made in the above-described exemplary embodiments while yet retaining many of the novel features and advantages of those embodiments. Accordingly, all such variations and modifications are intended to be included within the scope of the appended claims.

## Claims

1. A method for operating a mobile wireless communication device (100) having active new password entry logic, for use with a set of plural specified applicable password policies that must all be met before a new password can be set, said method being **characterized by** displaying a new password entry screen which includes:
(a) a visual indication (400) of progress toward meeting all plural said applicable password policies that is updated as new password characters are being entered,
(b) a display of text providing a hint (402) associated with at least one applicable password policy that has not yet been satisfied, wherein the hint associated with at least one applicable password policy not yet satisfied is randomly changed during entry of a new password whenever any previously unsatisfied password policy has been satisfied; and
(c) a display, upon user command, of a more detailed password policy screen which identifies applicable password policies and which includes an indication of whether each policy has yet been met or unmet by previously entered new password characters.

2. A method as in claim 1 wherein said new password entry screen is updated after each new password character is entered.

3. A method as in claim 1 wherein said visual indication of progress is presented in a bar chart form.

4. A method as in claim 1 wherein said visual indication of progress is presented as at least one change in color.

5. A mobile wireless communication device (100) having active new password entry logic for use with a set of plural specified applicable password policies that must all be met before a new password can be set, said device being **characterized by**:
means (300) for displaying a new password entry screen which includes a visual indication (400) of progress toward meeting all said plural applicable password policies that is updated as new password characters are being entered;
means (322) for also displaying on said screen text providing a hint (402) associated with at least one applicable password policy that has not yet been satisfied, wherein the hint associated with at least one applicable password policy not yet satisfied is randomly changed during entry of a new password whenever any previously unsatisfied password policy has been satisfied;
and
means (314, 316) for further displaying upon user command, a more detailed password policy screen which identifies applicable password policies and which includes an indication of whether each policy has yet been met or unmet by previously entered new password characters.

6. A device as in claim 5 wherein said new password entry screen is updated after each new password character is entered.

7. A device as in claim 5 wherein said visual indication of progress is presented in a bar chart form.

8. A device as in claim 5 wherein said visual indication of progress is presented as at least one change in color.

9. A digital storage medium containing a computer program which, when executed, provides a method for operating a mobile wireless communication device having active new password entry logic, for use with a set of plural specified applicable password policies that must all be met before a new password can be set, said method being **characterized by** displaying a new password entry screen which includes:
(a) a visual indication (400) of progress toward meeting all said plural applicable password policies that is updated as new password characters are being entered,
(b) a display of text providing a hint (402) associated with at least one applicable password policy that has not yet been satisfied, wherein the hint associated with at least one applicable password policy not yet satisfied is randomly changed during entry of a new password whenever any previously unsatisfied password policy has been satsified;
and
(c) a display, upon user command, of a more detailed password policy screen which identifies applicable password policies and which includes an indication of whether each policy has yet been met or unmet by previously entered new password characters.

10. A digital storage medium as in claim 9 wherein said new password entry screen is updated after each new password character is entered.

11. A digital storage medium as in claim 9 wherein said visual indication of progress is presented in a bar chart form.

12. A digital storage medium as in claim 9 wherein said visual indication of progress is presented as at least one change in color.

## Patentansprüche

1. Verfahren zum Betreiben einer mobilen drahtlosen Kommunikationsvorrichtung (100), die eine aktive neue Passworteingabelogik hat zur Verwendung mit einem Satz von mehreren spezifizierten anwendbaren Passwort-Richtlinien, die alle erfüllt sein müssen, bevor ein neues Passwort gesetzt werden kann, wobei das Verfahren **gekennzeichnet ist durch** Anzeigen eines neuen Passworteingabe-Bildschirms, der umfasst:
(a) eine visuelle Anzeige (400) eines Fortschritts in Richtung der Erfüllung aller der anwendbaren Passwort-Richtlinien, die aktualisiert wird, wenn neue Zeichen des Passworts eingegeben werden,
(b) eine Anzeige eines Texts, der einen Hinweis (402) liefert, der zu zumindest einer anwendbaren Passwort-Richtlinie gehört, die noch nicht erfüllt wurde, wobei der Hinweis, der zu zumindest einer noch nicht erfüllten anwendbaren Passwort-Richtlinie gehört, zufällig geändert wird während der Eingabe eines neuen Passworts, wenn eine vorher unerfüllte Passwort-Richtlinie erfüllt ist; und
(c) eine Anzeige, bei Benutzerbefehl, eines detaillierteren Passwort-Richtlinie-Bildschirms, der anwendbare Passwort-Richtlinien identifiziert und der eine Anzeige umfasst, ob jede Richtlinie bereits erfüllt ist oder nicht erfüllt ist **durch** vorher eingegebene neue Passwortzeichen.

2. Verfahren gemäß Anspruch 1, wobei der neue Passworteingabe-Bildschirm aktualisiert wird, nachdem jedes neue Passwortzeichen eingegeben ist.

3. Verfahren gemäß Anspruch 1, wobei die visuelle Anzeige des Fortschritts in einer Balkendiagrammform dargestellt wird.

4. Verfahren gemäß Anspruch 1, wobei die visuelle Anzeige des Fortschritts als zumindest eine Änderung in der Farbe dargestellt wird.

5. Mobile drahtlose Kommunikationsvorrichtung (100), die eine aktive neue Passworteingabelogik hat zur Verwendung mit einem Satz von mehreren spezifizierten anwendbaren Passwort-Richtlinien, die alle erfüllt sein müssen, bevor ein neues Passwort gesetzt werden kann, wobei die Vorrichtung **gekennzeichnet ist durch**:
Mittel (300) zur Anzeige eines neuen Passworteingabe-Bildschirms, der eine visuelle Anzeige (400) eines Fortschritts in Richtung der Erfüllung aller der anwendbaren Passwort-Richtlinien umfasst, die aktualisiert wird, wenn neue Passwortzeichen eingegeben werden;
Mittel (322) zur Anzeige auf dem Bildschirm eines Texts, der einen Hinweis (402) liefert, der zu zumindest einer anwendbaren Passwort-Richtlinie gehört, die noch nicht erfüllt wurde, wobei der Hinweis, der zu zumindest einer noch nicht erfüllten anwendbaren Passwort-Richtlinie gehört, zufällig geändert wird während der Eingabe eines neuen Passworts, wenn eine vorher unerfüllte Passwort-Richtlinie erfüllt ist; und
Mittel (314, 316) zur weiteren Anzeige, bei Benutzerbefehl, eines detaillierteren Passwort-Richtlinie-Bildschirms, der anwendbare Passwort-Richtlinien identifiziert und der eine Anzeige umfasst, ob jede Richtlinie bereits erfüllt ist oder nicht erfüllt ist **durch** vorher eingegebene neue Passwortzeichen.

6. Vorrichtung gemäß Anspruch 5, wobei der neue Passworteingabe-Bildschirm aktualisiert wird, nachdem jedes neue Passwortzeichen eingegeben ist.

7. Vorrichtung gemäß Anspruch 5, wobei die visuelle Anzeige des Fortschritts in einer Balkendiagrammform dargestellt wird.

8. Vorrichtung gemäß Anspruch 5, wobei die visuelle Anzeige des Fortschritts als zumindest eine Änderung in der Farbe dargestellt wird.

9. Digitales Speichermedium, das ein Computerprogramm enthält, das, wenn ausgeführt, ein Verfahren vorsieht zum Betreiben einer mobilen drahtlosen Kommunikationsvorrichtung, die eine aktive neue Passworteingabelogik hat zur Verwendung mit einem Satz von mehreren spezifizierten anwendbaren Passwort-Richtlinien, die alle erfüllt sein müssen, bevor ein neues Passwort gesetzt werden kann, wobei das Verfahren **gekennzeichnet ist durch** Anzeigen eines neuen Passworteingabe-Bildschirms, der umfasst:
(a) eine visuelle Anzeige (400) eines Fortschritts in Richtung der Erfüllung aller der anwendbaren Passwort-Richtlinien, die aktualisiert wird, wenn neue Passwortzeichen eingegeben werden,
(b) eine Anzeige eines Texts, der einen Hinweis (402) liefert, der zu zumindest einer anwendbaren Passwort-Richtlinie gehört, die noch nicht erfüllt wurde, wobei der Hinweis, der zu zumindest einer noch nicht erfüllten anwendbaren Passwort-Richtlinie gehört, zufällig geändert wird während der Eingabe eines neuen Passworts, wenn eine vorher unerfüllte Passwort-Richtlinie erfüllt ist; und
(c) eine Anzeige, bei Benutzerbefehl, eines detaillierteren Passwort-Richtlinie-Bildschirms, der anwendbare Passwort-Richtlinien identifiziert und der eine Anzeige umfasst, ob jede Richtlinie bereits erfüllt ist oder nicht erfüllt ist **durch** vorher eingegebene neue Passwortzeichen.

10. Digitales Speichermedium gemäß Anspruch 9, wobei der neue Passworteingabe-Bildschirm aktualisiert wird, nachdem jedes neue Passwortzeichen eingegeben ist.

11. Digitales Speichermedium gemäß Anspruch 9. wobei die visuelle Anzeige des Fortschritts in einer Balkendiagrammform dargestellt wird.

12. Digitales Speichermedium gemäß Anspruch 9, wobei die visuelle Anzeige des Fortschritts als zumindest eine Änderung in der Farbe dargestellt wird.

## Revendications

1. Procédé de fonctionnement d'un dispositif de communication mobile sans fil (100) possédant une logique active de saisie de nouveau mot de passe destinée à être utilisée avec un ensemble composé d'une pluralité de politiques de mot de passe applicables spécifiées qui doivent toutes être satisfaites avant qu'un nouveau mot de passe puisse être défini, ledit procédé étant **caractérisé par** l'affichage d'un écran de saisie de nouveau mot de passe qui comprend :
(a) une indication visuelle (400) du progrès dans la satisfaction de toute la pluralité desdites politiques de mot de passe applicables, qui est mise à jour au fur et à mesure que de nouveaux caractères du mot de passe sont saisis ;
(b) un affichage de texte fournissant un indice (402) associé à au moins une politique de mot de passe applicable qui n'a pas encore été satisfaite, l'indice associé à au moins une politique de mot de passe applicable qui n'a pas encore été satisfaite étant remplacé aléatoirement pendant la saisie d'un nouveau mot de passe lorsque l'une quelconque des politiques de mot de passe qui n'étaient pas précédemment satisfaites le devient ; et
(c) un affichage, en réponse à une instruction de l'utilisateur, d'un écran plus détaillé de politique de mot de passe qui identifie les politiques de mot de passe applicables et qui comprend une indication du fait que chacune des politiques a été satisfaite ou non par les caractères du nouveau mot de passe qui avaient été précédemment saisis.

2. Procédé selon la revendication 1, dans lequel ledit écran de saisie de nouveau mot de passe est mis à jour après la saisie de chaque caractère du nouveau mot de passe.

3. Procédé selon la revendication 1, dans lequel ladite indication visuelle du progrès se présente sous la forme d'une barre de progression.

4. Procédé selon la revendication 1, dans lequel ladite indication visuelle du progrès se présente sous la forme d'au moins un changement de couleur.

5. Dispositif de communication mobile sans fil (100) possédant une logique active de saisie de nouveau mot de passe destinée à être utilisée avec un ensemble composé d'une pluralité de politiques de mot de passe applicables spécifiées qui doivent toutes être satisfaites avant qu'un nouveau mot de passe puisse être défini, ledit dispositif étant **caractérisé par** :
un moyen (300) destiné à afficher un écran de saisie de nouveau mot de passe qui comprend une indication visuelle (400) du progrès dans la satisfaction de toute la pluralité desdites politiques de mot de passe applicables, qui est mise à jour au fur et à mesure que de nouveaux caractères du mot de passe sont saisis ;
un moyen (322) destiné à afficher également sur ledit écran du texte fournissant un indice (402) associé à au moins une politique de mot de passe applicable qui n'a pas encore été satisfaite, l'indice associé à au moins une politique de mot de passe applicable qui n'a pas encore été satisfaite étant remplacé aléatoirement pendant la saisie d'un nouveau mot de passe lorsque l'une quelconque des politiques de mot de passe qui n'étaient pas précédemment satisfaites le devient ; et
un moyen (314, 316) destiné à afficher également, en réponse à une instruction de l'utilisateur, un écran plus détaillé de politique de mot de passe qui identifie les politiques de mot de passe applicables et qui comprend une indication du fait que chacune des politiques a été satisfaite ou non par les caractères du nouveau mot de passe qui avaient été précédemment saisis.

6. Dispositif selon la revendication 5, dans lequel ledit écran de saisie de nouveau mot de passe est mis à jour après la saisie de chaque caractère du nouveau mot de passe.

7. Dispositif selon la revendication 5, dans lequel ladite indication visuelle du progrès se présente sous la forme d'une barre de progression.

8. Dispositif selon la revendication 5, dans lequel ladite indication visuelle du progrès se présente sous la forme d'au moins un changement de couleur.

9. Support de stockage numérique contenant un programme d'ordinateur qui, lorsqu'il est exécuté, fournit un procédé de fonctionnement d'un dispositif de communication mobile sans fil possédant une logique active de saisie de nouveau mot de passe destinée à être utilisée avec un ensemble composé d'une pluralité de politiques de mot de passe applicables spécifiées qui doivent toutes être satisfaites avant qu'un nouveau mot de passe puisse être défini, ledit procédé étant **caractérisé par** l'affichage d'un écran de saisie de nouveau mot de passe qui comprend :
(a) une indication visuelle (400) du progrès dans la satisfaction de toute la pluralité desdites politiques de mot de passe applicables, qui est mise à jour au fur et à mesure que de nouveaux caractères du mot de passe sont saisis ;
(b) un affichage de texte fournissant un indice (402) associé à au moins une politique de mot de passe applicable qui n'a pas encore été satisfaite, l'indice associé à au moins une politique de mot de passe applicable qui n'a pas encore été satisfaite étant remplacé aléatoirement pendant la saisie d'un nouveau mot de passe lorsque l'une quelconque des politiques de mot de passe qui n'étaient pas précédemment satisfaites le devient ; et
(c) un affichage, en réponse à une instruction de l'utilisateur, d'un écran plus détaillé de politique de mot de passe qui identifie les politiques de mot de passe applicables et qui comprend une indication du fait que chacune des politiques a été satisfaite ou non par les caractères du nouveau mot de passe qui avaient été précédemment saisis.

10. Support de stockage numérique selon la revendication 9, dans lequel ledit écran de saisie de nouveau mot de passe est mis à jour après la saisie de chaque caractère du nouveau mot de passe.

11. Support de stockage numérique selon la revendication 9, dans lequel ladite indication visuelle du progrès se présente sous la forme d'une barre de progression.

12. Support de stockage numérique selon la revendication 9, dans lequel ladite indication visuelle du progrès se présente sous la forme d'au moins un changement de couleur.
